# DEMANDE DE BREVET EUROPEEN

(11) **EP 3 670 602 A1**
(43) Date de publication de la demande: **24.06.2020**
(21) Numéro de dépôt: 19215985.3
(22) Date de dépôt: 13.12.2019
(51) Int. Cl.: C08L 23/12, C08L 23/14, H01B 13/06, H01B 3/44

(54) **COMPOSITION POLYMÈRE COMPRENANT AU MOINS DEUX POLYMERES HOMOPHASIQUES**

(30) Priorité: 20.12.2018 FR 1873707
(71) Demandeur: Nexans, 92400 Courbevoie (FR); Teknologian Tutkimuskeskus VTT Oy, 02150 Espoo (FI); InnoExc GmbH, 8008 Zurich (CH); Alma Mater Studiorum University of Bologna, 40126 Bologna (IT)
(72) Inventeur: PEREGO, Gabriele, 20144 MILAN (IT); MAZEL, Christelle, 38300 RUY (FR); PAAJANEN, Mika, 33720 TAMPERE (FI); KARTTUNEN, Mikko, 33720 TAMPERE (FI); VUORINEN, Tommi, 33800 TAMPERE (FI); FANTINEL, Fabiana, 8037 ZURICH (CH); SERI, Paolo, CIVITANOVA MARCHE (IT)
(74) Mandataire: Ipsilon

(57) **Abrégé**

La présente invention se rapporte à une composition polymère caractérisée en ce qu'elle comprend :
- au moins un premier polymère homophasique de propylène, et
- au moins un deuxième polymère homophasique d'éthylène, ledit deuxième polymère ayant un module élastique d'au plus 300 MPa, déterminé selon la norme ISO 527-1, -2 (2012),
la quantité en poids du premier polymère étant supérieure à la quantité en poids du deuxième polymère, par rapport au poids total de la composition polymère.

## Description

La présente invention se rapporte à une composition polymère comprenant au moins deux polymères homophasiques, dont au moins un à base de propylène, ainsi qu'à un câble comprenant au moins une couche polymérique obtenue à partir de ladite composition polymère.

L'invention s'applique typiquement mais non exclusivement aux câbles électriques destinés au transport d'énergie, notamment aux câbles d'énergie à moyenne tension (notamment de 6 à 45-60 kV) ou à haute tension (notamment supérieure à 60 kV, et pouvant aller jusqu'à 400 kV), qu'ils soient en courant continu ou alternatif, dans les domaines du transport d'électricité aérien, sous-marin, terrestre, ou encore de l'aéronautique.

Du document WO2011/092533 est connu un câble électrique comprenant une couche isolante à base d'un copolymère hétérophasique de propylène et au moins d'une nano-charge non-traitée en surface.

Toutefois, cette composition polymère pour couche isolante de câble électrique ne présente pas des propriétés thermo-mécaniques et de résistance au claquage électrique optimales.

Le but de la présente invention est de pallier les inconvénients des techniques de l'art antérieur en proposant une composition polymère, utilisée en particulier en tant que couche polymérique pour câble, présentant des propriétés électriques améliorées, notamment en termes de résistance au claquage, tout en garantissant une bonne résistance à la déformation par des forces mécaniques à température élevée, notamment à des températures d'au moins 90°C.

La présente invention a pour objet une composition polymère caractérisée en ce qu'elle comprend :
- au moins un premier polymère homophasique de propylène, et
- au moins un deuxième polymère homophasique d'éthylène, ledit deuxième polymère ayant un module élastique d'au plus 300 MPa, déterminé selon la norme ISO 527-1, -2 (2012), la quantité en poids du premier polymère étant supérieure à la quantité en poids du deuxième polymère, par rapport au poids total de la composition polymère.

Grâce à l'invention, la composition polymère, destinée notamment à être utilisée en tant que couche polymérique pour câble, présente une résistance au claquage (i.e. rigidité diélectrique) améliorée de façon significative.

En outre, ladite composition polymère présente de très bonnes propriétés de résistance à la déformation par des forces mécaniques, notamment à des températures élevées, pouvant être de l'ordre de 90°C ou au-delà. Plus particulièrement, la composition polymère de l'invention, lorsqu'elle est utilisée en tant que couche polymérique d'un câble, est en mesure de fonctionner à des températures pouvant être d'au moins de 90°C, en limitant de façon significative, voire en évitant, la déformation de la structure ou géométrie du câble, et garantissant ainsi son bon fonctionnement en configuration opérationnelle.

Dans la présente invention, on entend par « polymère » tout type de polymère bien connu de l'homme du métier, tel que par exemple les homopolymères ou les copolymères (e.g. copolymère séquencé, copolymère statistique, terpolymère, ...etc).

Dans la présente invention, on entend par « polymère homophasique » tout polymère présentant une unique phase, ou phase sensiblement homogène.

Plus particulièrement, un polymère homophasique n'est pas un polymère hétérophasique. A titre d'exemple de polymères hétérophasiques, on peut citer les copolymères hétérophasiques de propylène, tels que par exemple ceux décrits dans le document WO2011/092533, à savoir : Adflex Q200F ou Hifax CA 7441A, de la société Basell (LyondellBasell).

Le polymère hétérophasique comprend au moins deux phases distinctes : l'une comprenant une matrice polymère, et l'autre comprenant des particules ou nodules dispersé(e)s dans cette matrice polymère, qui peut être par exemple une phase élastomérique. Ce type de polymère peut être facilement identifiable par des techniques bien connues de l'homme du métier, telles que par exemple par microscopie électronique à balayage (MEB). Plus particulièrement, avec un grossissement x 10 000, il est classique d'observer lesdites particules ou nodules dispersé(e)s dans ladite matrice polymère, lesdites particules ayant avec une taille moyenne en nombre allant de 200 nm à 10 µm, et de préférence entre 500 nm et 1 µm.

Un polymère homophasique ne comprend notamment pas ce type de particules ou nodules dispersé(e)s dans une matrice polymère. En effet, grâce au MEB, une unique phase sensiblement homogène peut être observée. Plus particulièrement, avec un grossissement x 10 000, il est classique d'observer une matrice polymère homogène ne comportant sensiblement pas de particules ou nodules dispersé(e)s dans ladite matrice.

Dans la présente invention, le premier polymère homophasique est un polymère de propylène, et plus particulièrement un homopolymère de propylène ou un copolymère de propylène.

Le premier polymère homophasique de propylène (i.e. premier polymère) peut être avantageusement un copolymère de propylène et d'oléfine, ou en d'autres termes un copolymère de propylène avec au moins un co-monomère d'oléfine. L'oléfine ou co-monomère d'oléfine du premier polymère peut être une oléfine différente du propylène, et notamment l'oléfine ou co-monomère d'oléfine du premier polymère peut être de l'éthylène ou une oléfine de formule CH₂= CH-R, dans laquelle R est un alkyle linéaire ou ramifié ayant de 2 à 10 atomes de carbone. Par exemple, l'oléfine de formule CH₂= CH-R (pour le premier polymère) peut être choisie parmi 1-butene, 1-pentene, 4-methyl-1-pentene, 1-hexene, 1-octene, 1-dodecene, et un de leurs mélanges.

A titre d'exemple, le premier polymère peut être un copolymère de propylène et d'éthylène.

Ledit copolymère peut être classiquement obtenu par copolymérisation de propylène avec au moins ledit co-monomère d'oléfine en présence d'un catalyseur Ziegler Natta bien connu de l'homme du métier.

Dans la présente invention, le premier polymère homophasique de propylène peut avoir un module élastique strictement supérieur à 300 MPa, de préférence d'au moins 400 MPa, de préférence d'au moins 600 MPa, et de façon particulièrement préférée d'au moins 800 MPa, déterminé selon la norme ISO 527-1, -2 (2012).

Plus particulièrement, le premier polymère homophasique de propylène peut avoir un module élastique d'au plus 2000 MPa, et de préférence d'au plus 1500 MPa, et de façon particulièrement préférée d'au plus 1200 MPa.

Dans la présente invention, le deuxième polymère homophasique est un polymère d'éthylène, et plus particulièrement un homopolymère ou un copolymère d'éthylène. De préférence, le premier polymère homophasique de propylène est différent du deuxième polymère homophasique d'éthylène.

Le deuxième polymère homophasique d'éthylène (i.e. deuxième polymère) peut être avantageusement un copolymère d'éthylène et d'oléfine, ou en d'autres termes un copolymère d'éthylène avec au moins un co-monomère d'oléfine. L'oléfine ou co-monomère d'oléfine du deuxième polymère peut être une oléfine différente de l'éthylène, et notamment l'oléfine ou co-monomère d'oléfine du deuxième polymère peut être une oléfine de formule CH₂= CH-R, dans laquelle R est un alkyle linéaire ou ramifié ayant de 1 à 12 atomes de carbone. Par exemple, l'oléfine de formule CH₂= CH-R (pour le deuxième polymère) peut être choisie parmi propylene, 1-butene, isobutylene, 1-pentene, 4-methyl-1-pentene, 1-hexene, 1-octene, 1-dodecene, et un de leurs mélanges ; et de préférence parmi le propylène et le 1-octène.

A titre d'exemple, le deuxième polymère peut être un copolymère d'éthylène et de propylène ou un copolymère d'éthylène et d'octène.

Ledit copolymère peut être classiquement obtenu par copolymérisation d'éthylène avec au moins ledit co-monomère d'oléfine en présence d'un catalyseur métallocène bien connu de l'homme du métier.

Dans la présente invention, le deuxième polymère homophasique d'éthylène a un module élastique d'au plus 300 MPa, de préférence d'au plus 200 MPa, et de façon particulièrement préférée d'au plus 100 MPa, déterminé selon la norme ISO 527-1, -2 (2012).

Plus particulièrement, le deuxième polymère homophasique d'éthylène peut avoir un module élastique d'au moins 1 MPa, de préférence d'au moins 5 MPa, de préférence d'au moins 10 MPa, et de façon particulièrement préférée d'au moins 30 MPa.

Dans la présente invention, le module élastique ou module d'Young d'un polymère (connu sous l'anglicisme « *Tensile Modulus* ») est bien connu de l'homme du métier, et peut être facilement déterminé selon la norme ISO 527-1, -2 (2012). La norme ISO 527 présente une première partie, notée « ISO 527-1 », et une deuxième partie, notée « ISO 527-2 » spécifiant les conditions d'essai relatives aux principes généraux de la première partie de la norme ISO 527.

Dans la présente invention, la quantité en poids du premier polymère est supérieure à la quantité en poids du deuxième polymère, par rapport au poids total de la composition polymère.

Plus particulièrement, la composition polymère peut comprendre au moins 30% en poids du premier polymère, de préférence au moins 40% en poids du premier polymère, et de façon particulièrement préférée au moins 50% en poids du premier polymère, par rapport au poids total de la composition polymère. Elle peut en outre comprendre au plus 80% en poids du premier polymère, et de préférence au plus 70% en poids du premier polymère, par rapport au poids total de la composition polymère.

Plus particulièrement, la composition polymère peut comprendre au moins 20% en poids du deuxième polymère, et de préférence au moins 30% en poids du deuxième polymère, et de façon particulièrement préférée au moins 40% en poids du deuxième polymère, par rapport au poids total de la composition polymère. Elle peut en outre comprendre au plus 70% en poids du deuxième polymère, et de préférence au plus 60% en poids du deuxième polymère, par rapport au poids total de la composition polymère.

La composition polymère de l'invention peut en outre comprendre au moins une nano-charge.

La nano-charge de l'invention est plus particulièrement une charge de dimension nanométrique.

La ou les nano-charge(s) de l'invention ont typiquement au moins une de leurs dimensions de taille nanométrique (10⁻⁹ mètre).

Dans la présente invention, on entend par « nano-charge », une particule élémentaire. Un ensemble de particules élémentaires peut être un agglomérat ou agrégat de particules élémentaires, selon les dimensions.

Plus particulièrement, la ou les nano-charge(s) de l'invention (i.e. une ou des particules élémentaires) peu(ven)t avoir au moins une de leurs dimensions d'au plus 2000 nm (nanomètres), de préférence d'au plus 1000 nm, de préférence d'au plus 800 nm, de préférence d'au plus 600 nm, de préférence d'au plus 400nm, et plus préférentiellement d'au plus 100 nm.

En outre, la ou les nano-charge(s) de l'invention peu(ven)t avoir au moins une de leurs dimensions d'au moins 1 nm, et de préférence d'au moins 5 nm.

De préférence, la ou les nano-charge(s) de l'invention peu(ven)t avoir au moins une de leurs dimensions allant de 1 à 800 nm.

En considérant plusieurs nano-charges selon l'invention, on entend par le terme « dimension », la dimension moyenne en nombre de l'ensemble des nano-charges d'une population donnée, cette dimension étant classiquement déterminée par des méthodes bien connues de l'homme du métier.

La dimension de la ou des nano-charges selon l'invention peut être par exemple déterminée par microscopie, notamment par microscope électronique à balayage (MEB) ou par microscope électronique à transmission (MET). Plus particulièrement, la dimension de la ou des nano-charges pouvant être comprise dans la composition polymère de l'invention, peut être déterminée par MET sur au moins une vingtaine de clichés, par préparation d'échantillons de composition polymère comprenant la ou lesdites nano-charges, à -140°C environ avec des épaisseurs de 100 nm environ, les échantillons étant ensuite positionnés sur un support en cuivre pour l'observation par MET. On appelle cette technique de préparation la cryo-ultramicrotomie.

Au moins une des nano-charges, ou plus particulièrement les nano-charges comprises dans la composition polymère, peu(ven)t avoir :
- un facteur de forme sensiblement égal à 1 : on parle alors de nano-charge isodimensionnelle, ou
- un facteur de forme supérieur à 1, de préférence d'au moins 10, et de préférence d'au moins 100.

Dans la présente invention, le facteur de forme est typiquement le rapport entre la plus grande dimension d'une nano-charge (telle que par exemple la longueur d'une nano-charge lorsqu'elle est du type lamellaire ou cylindrique) et la plus petite dimension de la nano-charge (telle que par exemple l'épaisseur d'une nano-charge du type lamellaire, ou le diamètre d'une nano-charge du type cylindrique).

La nano-charge de l'invention peut être de préférence une nano-charge inorganique pouvant être choisie parmi les carbonates de métaux alcalino-terreux, les sulfates de métaux alcalino-terreux, les oxydes métalliques, les oxydes de métalloïdes, les silicates métalliques, et les siloxanes (ou oligomères tri-dimensionnels organosiliciés).

A titre d'exemple :
- les nano-charges de carbonates de métaux alcalino-terreux peuvent être des nano-charges de carbonate de calcium,
- les nano-charges de sulfates de métaux alcalino-terreux peuvent être des nano-charges de sulfate de baryum,
- les nano-charges d'oxydes métalliques, ou en d'autres termes des nano-charges comprenant uniquement un ou plusieurs éléments oxygène et un ou plusieurs éléments métalliques, peuvent être des nano-charges d'alumine (Al₂O₃), d'oxyde de zinc (ZnO), de dioxyde de titane (TiO₂), d'oxyde de magnésium (MgO), d'oxydes de fer (Fe₂O₃, Fe₃O₄),
- les nano-charges d'oxydes de métalloïdes peuvent être des nano-charges de dioxyde de silicium (silice), notamment des nano-charges de silice pyrogénée, l'expression « silice pyrogénée » étant bien connue sous l'anglicisme « fumed silica »,
- les nano-charges de silicate métalliques peuvent être par exemple des aluminosilicates (nano-clay), ou des nano-charges de silicate d'aluminium et de magnésium hydraté telles que la montmorillonite appartenant à la famille des phyllosilicates,
- les nano-charges de siloxanes ou d'oligomères tri-dimensionnels organosiliciés peuvent être des nano-charges de silsesquioxanes (POSS) ou ses dérivés, tels que par exemple des nano-charges de Trisilanolphényl Polyhedral SilSesquioxane (TP-POSS).

De préférence, les nano-charges de l'invention peuvent être des nano-charges d'oxydes métalliques et/ou des nano-charges d'oxydes de métalloïdes.

La nano-charge de l'invention peut être une charge dite « traitée » ou une charge dite « non-traitée ».

On entend par « charge traitée » une charge ayant subi un traitement de surface, ou en d'autres termes, une charge traitée en surface. Ledit traitement de surface permet notamment de modifier les propriétés de surface de la charge, par exemple pour améliorer la compatibilité de la nono-charge avec les premier et deuxième polymères.

Dans un mode de réalisation préféré, la nano-charge de l'invention peut être une charge silanisée, ou en d'autres termes une nano-charge ayant été traitée pour obtenir une nano-charge silanisée.

Le traitement de surface utilisé pour obtenir une nano-charge silanisée est notamment un traitement de surface à partir d'au moins un composé silane (avec ou sans agent de couplage), ce type de traitement de surface étant bien connu de l'homme du métier.

Ainsi, la nano-charge silanisée de l'invention peut comprendre à sa surface des groupements siloxane et/ou silane. Lesdits groupements peuvent être du type vinylsilane, alkylsilane, epoxysilane, methacryloxysilane, acryloxysilane, aminosilane ou mercaptosilane.

Le composé silane utilisé pour obtenir la nanoparticule silanisée peut être choisi de préférence parmi :
- des alkyltriméthoxysilane ou des alkyltriéthoxysilane, tels que par exemple octadecyltriméthoxysilane (OdTMS - C18), octyl(triéthoxy)silane (OTES - C8), methyl triméthoxysilane, hexadecyl triméthoxysilane,
- des vinyltriméthoxysilane ou des vinyltriéthoxysilane,
- des méthacryloxysilane ou des acryloxysilane, tels que par exemple 3-méthacryloxypropyl méthyldiméthoxysilane, 3-méthacryloxypropyl triméthoxysilane, 3-méthacryloxypropyl triméthoxysilane, 3-acryloxypropyl triméthoxysilane, et/ou
- un de leurs mélanges

La nano-charge traitée ou la nano-charge non-traitée selon l'invention peut avoir de préférence une surface spécifique (BET) d'au moins 70 m²/g, de préférence d'au moins 100 m²/g, et de préférence d'au moins 120 m²/g. La nano-charge peut avoir une surface spécifique (BET) d'au plus 1000 m²/g, et de préférence d'au plus 500 m²/g.

Dans la présente invention, la surface spécifique d'une nano-charge traitée ou d'une nano-charge non-traitée, peut être facilement déterminée selon la norme DIN 9277 (2010).

La composition polymère de l'invention peut comprendre au plus 10,0% en poids de nano-charge, de préférence au plus 5,0% en poids de nano-charge, et de préférence au plus 3,0% en poids de nano-charge, par rapport au poids total de la composition polymère.

La composition polymère de l'invention peut comprendre au moins 0,2% en poids de nano-charge, de préférence au moins 0,5% en poids de nano-charge, et de préférence au moins 1,0% en poids de nano-charge, par rapport au poids total de la composition polymère.

La composition polymère peut comprendre en outre un ou plusieurs additifs.

Les additifs sont bien connus de l'homme du métier et peuvent être choisis parmi des antioxydants, des agents anti-UV, des agents anti-cuivre, des agents anti-arborescences d'eau, des pigments, des agents compatibilisants, et un de leurs mélanges.

La composition polymère de l'invention peut typiquement comprendre de 0,01 à 5% en poids environ, et de préférence de 0,1 à 2% en poids environ d'additifs, par rapport au poids total de la composition polymère.

Concernant plus particulièrement les antioxydants, ils permettent classiquement de protéger la composition polymère des contraintes thermiques engendrées lors des étapes de fabrication du câble ou de fonctionnement du câble.

Les antioxydants sont choisis de préférence parmi les phénols encombrés, les thioesters, les antioxydants à base de soufre, les antioxydants à base de phosphore, les antioxydants de type amine et un de leurs mélanges.

À titre d'exemples de phénols encombrés, on peut citer le Pentaérythritoltétrakis(3-(3,5-di-*tert*-butyl-4-hydroxyphényl)propionate) (Irganox® 1010), l'octadécyl 3-(3,5-di-*tert*-butyl-4-hydroxyphényl)propionate (Irganox® 1076), le 1,3,5-triméthyl-2,4,6-tris(3,5-di-*tert*-butyl-4-hydroxybenzyl)benzène (Irganox® 1330), le 4,6-bis (octylthiométhyl)-o-crésol (Irgastab® KV10), le 2,2'-thiobis(6-*tert*-butyl-4-méthylphénol) (Irganox® 1081), le 2,2'- thiodiéthylène bis[3-(3,5-di-*tert*-butyl-4-hydroxyphényl) propionate] (Irganox® 1035), le 2,2'-méthylènebis(6-*tert*-butyl-4-méthylphénol), le 1,2-bis(3,5-di-tert-butyl-4-hydroxyhydrocinnamoyl) hydrazine (Irganox® MD 1024), ou le 2,2'-oxamido-bis(éthyl-3(3,5-di-*tert-*butyl-4-hydroxyphényle)propionate).

À titre d'exemples de thioesters, on peut citer le didodécyl-3,3'-thiodipropionate (Irganox® PS800), le distéaryl thiodipropionate (Irganox® PS802) ou le 4,6-bis(octylthiométhyle)-o-crésol (Irganox® 1520).

À titre d'exemples d'antioxydants à base de soufre, on peut citer le dioctadecyl-3,3'-thiodipropionate ou le didodecyl-3,3'-thiodipropionate.

À titre d'exemples d'antioxydants à base de phosphore, on peut citer le tris(2,4-di-*tert*-butyl-phényle)phosphite (Irgafos® 168) ou le bis(2,4-di-*tert-*butylphényl)pentaérythritol diphosphite (Ultranox® 626).

À titre d'exemples d'antioxydants de type amine, on peut citer les phénylène diamines (e.g. 1PPD ou 6PPD), les diphénylamine styrène, les diphénylamines, les mercapto benzimidazoles et le 2,2,4-triméthyl-1,2 dihydroquinoline polymérisé (TMQ).

À titre d'exemples de mélanges d'antioxydants, on peut citer l'Irganox® B 225 qui comprend un mélange équimolaire d'Irgafos® 168 et d'Irganox® 1010 tels que décrits ci-dessus.

Concernant plus particulièrement les agents compatibilisant, ils permettent classiquement d'améliorer la compatibilité entre la nano-charge d'une part, et les premier et deuxième polymères d'autre part. L'agent compatibilisant favorise plus particulièrement les interactions physicochimiques à l'interface entre ladite nano-charge et le/les polymère(s) pour obtenir notamment une meilleure homogénéité de mélange (dispersion et/ou distribution) entre ladite nano-charge et le/les polymère(s).

Dans la présente invention, la composition polymère peut être une composition polymère thermoplastique. Elle n'est de préférence pas destinée à être réticulée.

En particulier, la composition polymère ne comprend pas d'agents de réticulation, d'agents de couplage de type silane, de peroxydes et/ou d'additifs qui permettent une réticulation. En effet de tels agents peuvent dégrader la composition polymère, notamment utilisée en tant que couche polymérique pour câble.

Dans un mode particulier de réalisation, la composition polymère de l'invention peut comprendre moins de 1,0% en poids, de préférence au plus 0,5% en poids, et de façon particulièrement préférée 0% en poids, de liquide diélectrique par rapport au poids total de la composition polymère. Le liquide diélectrique peut être typiquement une huile, par exemple une huile minérale polaire ou non.

La composition polymère de l'invention peut être utilisée comme une couche polymérique d'un câble, notamment d'un câble électrique.

Le câble électrique de l'invention peut être plus particulièrement un câble d'énergie à haute tension (notamment supérieur à 60 kV, et pouvant aller jusqu'à 800 kV) en courant continu.

Le câble électrique de l'invention peut comprendre au moins un conducteur électrique allongé et une ou plusieurs couche(s) polymérique(s) entourant ledit conducteur électrique allongé, la ou lesdites couche(s) polymérique(s) étant obtenue(s) à partir de la composition polymère telle que définie dans l'invention.

La couche polymérique du câble de l'invention est avantageusement une couche thermoplastique, ou en d'autres termes une couche non réticulée.

On entend par « couche non réticulée » dans la présente invention une couche dont le taux de gel selon la norme ASTM D2765-01 (extraction au xylène) est d'au plus 30%, de préférence d'au plus 20%, de préférence d'au plus 10%, et de façon particulièrement préférée de 0%.

La couche polymérique de l'invention peut être facilement mise en forme par extrusion autour du conducteur électrique allongé. On parle alors de couche extrudée.

De préférence, l'ensemble des couches du câble de l'invention sont positionnées de façon coaxiale par rapport à l'axe longitudinal du câble électrique.

Le conducteur électrique allongé de l'invention peut être un monoconducteur tel que par exemple un fil métallique, ou un multiconducteur tel qu'une pluralité de fils métalliques, torsadés ou non.

Le conducteur électrique allongé peut être réalisé à partir d'un matériau métallique notamment choisi parmi l'aluminium, un alliage d'aluminium, du cuivre, un alliage de cuivre, et une de leurs combinaisons.

La section nominale du conducteur électrique peut aller de 0,5 mm² à plus de 1200 mm², et de préférence de 50 mm² à 240 mm². La section nominale du conducteur électrique peut notamment être définie selon la norme IEC 60228 (2004).

Le ou les conducteur(s) électrique(s) allongé(s) peuvent être de préférence au centre du câble électrique.

Dans un mode de réalisation préféré, la couche polymérique peut être une couche électriquement isolante.

Dans la présente invention, on entend par « couche électriquement isolante » une couche dont la conductivité électrique peut être d'au plus 1.10⁻⁸ S/m (siemens par mètre), de préférence d'au plus 1.10⁻⁹ S/m, et de préférence d'au plus 1.10⁻¹⁰ S/m, mesurée à 25°C en courant continu.

Dans un mode de réalisation particulier, le câble électrique de l'invention peut comprendre une première couche semi-conductrice entourant le conducteur électrique allongé, une couche électriquement isolante entourant la première couche semi-conductrice, et une deuxième couche semi-conductrice entourant la couche électriquement isolante, au moins une desdites couches dudit câble étant la couche polymérique telle que définie dans l'invention.

La première et la deuxième couches semi-conductrices, comme la couche électriquement isolante, sont notamment des couches polymériques, pouvant être extrudées par des techniques bien connues de l'homme du métier.

De préférence, la couche électriquement isolante dudit câble est la couche polymérique de l'invention.

Dans la présente invention, on entend par « couche semi-conductrice » une couche dont la conductivité électrique peut être strictement supérieure à 1.10⁻⁸ S/m (Siemens par mètre), de préférence d'au moins 1.10⁻³ S/m, et de préférence peut être inférieure à 1.10³ S/m, mesurée à 25°C en courant continu.

La couche semi-conductrice a plus particulièrement une conductivité électrique supérieure à celle d'une couche électriquement isolante. La conductivité électrique de la couche électriquement isolante peut être au moins 10 fois inférieure à la conductivité électrique d'une couche semi-conductrice, de préférence au moins 100 fois inférieure à la conductivité électrique d'une couche semi-conductrice, et de façon particulièrement préférée au moins 1000 fois inférieure à la conductivité électrique d'une couche semi-conductrice.

La première couche semi-conductrice, la couche électriquement isolante et la deuxième couche semi-conductrice peuvent constituer une isolation tricouche. En d'autres termes, la couche électriquement isolante peut être en contact physique direct avec la première couche semi-conductrice, et la deuxième couche semi-conductrice peut être en contact physique direct avec la couche électriquement isolante.

Le câble peut comprendre en outre une gaine électriquement isolante entourant la deuxième couche semi-conductrice, et peut être en contact physique direct avec celle-ci.

Le câble électrique peut comprendre en outre un écran métallique entourant la deuxième couche semi-conductrice. Dans ce cas, la gaine électriquement isolante peut entourer ledit écran métallique.

Cet écran métallique peut être un écran dit « filaire » composé d'un ensemble de conducteurs en cuivre ou en aluminium arrangé autour et le long de la deuxième couche semi-conductrice, un écran dit « rubané » composé d'un ou de plusieurs rubans métalliques conducteurs en cuivre ou en aluminium posé(s) éventuellement en hélice autour de la deuxième couche semi-conductrice ou un ruban métallique conducteur en aluminium posé longitudinalement autour de la deuxième couche semi-conductrice et rendu étanche grâce à de la colle dans les zones de chevauchement de parties dudit ruban, ou d'un écran dit « étanche » de type tube métallique composé éventuellement de plomb ou d'alliage de plomb et entourant la deuxième couche semi-conductrice. Ce dernier type d'écran permet notamment de faire barrière à l'humidité ayant tendance à pénétrer le câble électrique en direction radiale.

Tous les types d'écrans métalliques peuvent jouer le rôle de mise à la terre du câble électrique et peuvent ainsi transporter des courants de défaut, par exemple en cas de court-circuit dans le réseau concerné.

D'autres couches, telles que des couches gonflantes en présence d'humidité peuvent être ajoutées entre la deuxième couche semi-conductrice et l'écran métallique, ces couches permettant d'assurer l'étanchéité longitudinale du câble électrique à l'eau.

Selon une autre caractéristique de l'invention, et afin de garantir un câble dit « *Halogen-Free* » ou dit plus particulièrement « HFFR » pour l'anglicisme « *Halogen-Free Flame Retardant* », le câble, ou en d'autres termes les éléments qui composent ledit câble, ne comprend/comprennent de préférence pas de composés halogénés. Ces composés halogénés peuvent être de toutes natures, tels que par exemple des polymères fluorés ou des polymères chlorés comme le polychlorure de vinyle (PVC), le chlorure de polyvinylidène, des plastifiants halogénés, des charges minérales halogénées, ...etc.

Un autre objet de l'invention est un procédé de fabrication d'un câble électrique selon l'invention, comprenant l'étape d'extruder la composition polymère telle que définie dans l'invention, autour d'au moins un conducteur électrique allongé.

L'extrusion peut être réalisée par tout procédé bien connu de l'homme du métier, notamment à l'aide d'une extrudeuse, par exemple de type monovis.

Préalablement à l'étape d'extrusion, le procédé peut en outre comprendre une étape de mélange du premier et du deuxième polymères homophasiques, avec optionnellement au moins une nano-charge, puis une étape de formation de granulés. L'étape de mélange peut se faire en utilisant une extrudeuse bis-vis, un mélangeur BUSS, ou tout autre appareil bien connu de l'homme du métier.

D'autres caractéristiques et avantages de la présente invention apparaîtront à la lumière de la description d'exemples non limitatifs de compositions et de câbles selon l'invention fait notamment en référence aux figures suivantes.

### Brève description des dessins

[Fig. 1]

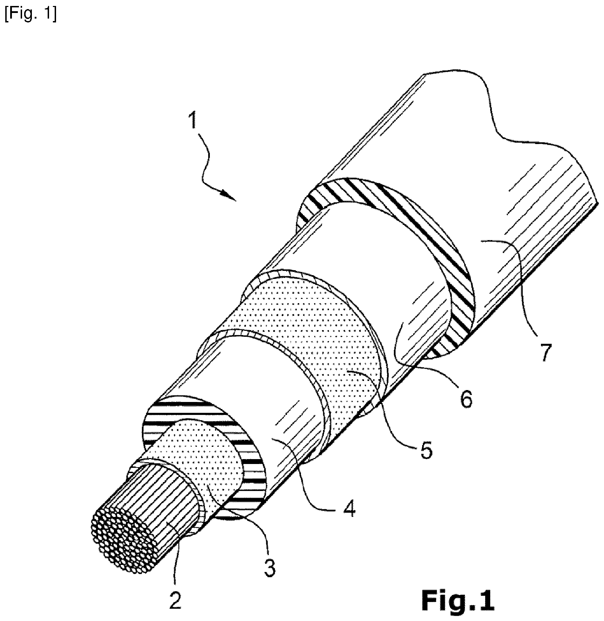

   La figure 1 représente une vue schématique d'un câble électrique selon un mode de réalisation préféré conforme à l'invention.
[Fig. 2]

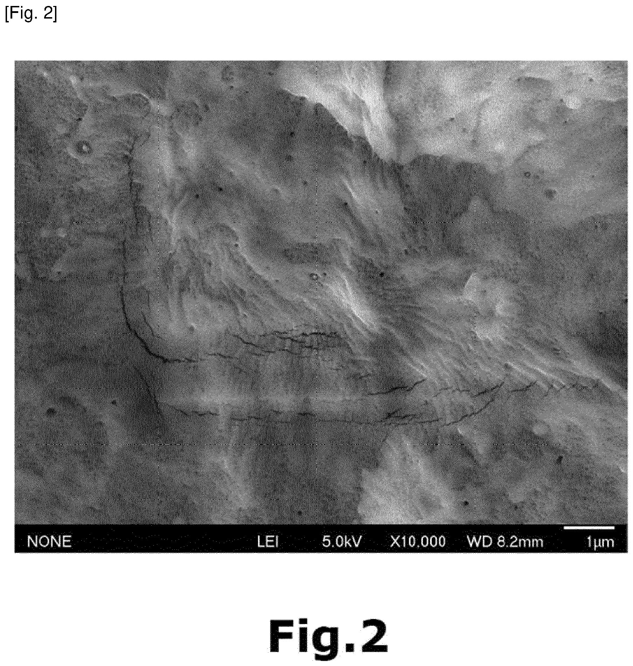

   La figure 2 représente un cliché MEB avec un grossissement de 10000, d'un échantillon du polymère homophasique référencé Moplen RP210G commercialisé par la société Basell (LyondellBasell).
[Fig. 3]

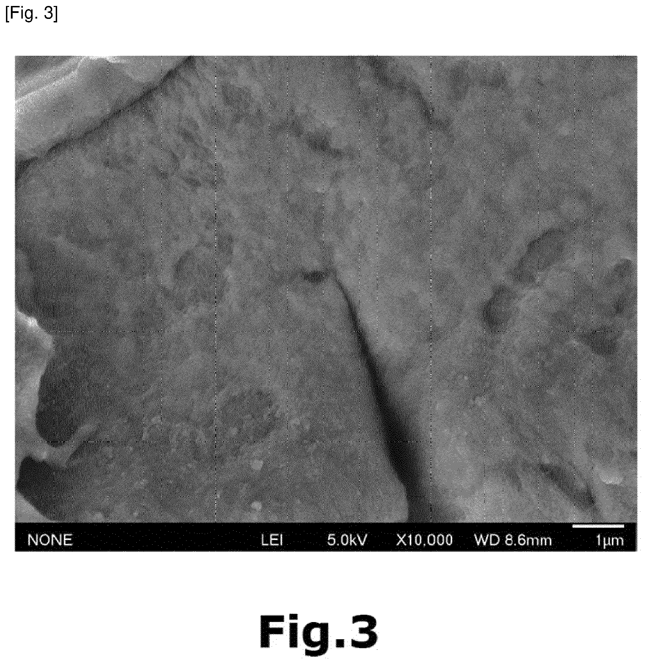

   La figure 3 représente un cliché MEB avec un grossissement de 10000, d'un échantillon du polymère homophasique référencé Engage 8540 commercialisé par la société Dow.
[Fig. 4]

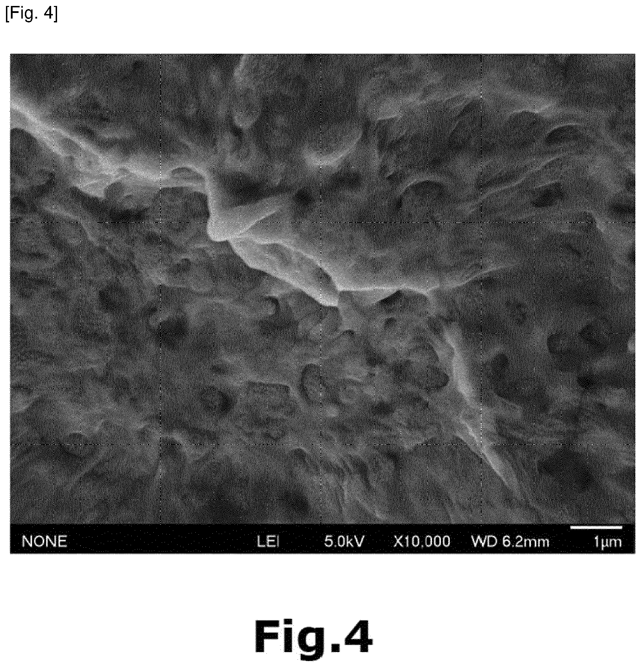

   La figure 4 représente un cliché MEB avec un grossissement de 10000, d'un échantillon du polymère hétérophasique référencé Hifax CA 7441A commercialisé par la société Basell (LyondellBasell).

Pour des raisons de clarté, seuls les éléments essentiels pour la compréhension de l'invention ont été représentés de manière schématique, et ceci sans respect de l'échelle.

Le câble d'énergie 1 à moyenne ou haute tension, illustré dans la figure 1, comprend un conducteur électrique allongé 2 central, notamment en cuivre ou en aluminium. Le câble d'énergie 1 comprend en outre plusieurs couches disposées successivement et coaxialement autour de ce conducteur électrique allongé 2 central, à savoir : une première couche 3 semi-conductrice dite « couche semi-conductrice interne », une couche 4 électriquement isolante, une deuxième couche 5 semi-conductrice dite « couche semi-conductrice externe », un écran métallique 6 de mise à la terre et/ou de protection, et une gaine extérieure de protection 7.

La couche 4 électriquement isolante est une couche extrudée thermoplastique (i.e. non réticulée), obtenue à partir de la composition polymère selon l'invention.

Les couches semi-conductrices 3 et 5 sont des couches extrudées thermoplastiques (i.e. non réticulées).

La présence de l'écran métallique 6 et de la gaine extérieure de protection 7 est préférentielle, mais non essentielle, cette structure de câble étant en tant que telle bien connue de l'homme du métier.

### EXEMPLES

### 1. Compositions polymères

Le tableau 1 ci-dessous rassemble des compositions polymères dont les quantités des composés sont exprimées en pourcentage en poids par rapport au poids total de la composition polymère.

Les compositions I1 à I3 sont des compositions polymères conformes à l'invention.

**[Tableaux 1]**

| **Compositions polymères** | **I1** | **I2** | **I3** |
|---|---|---|---|
| Premier polymère homophasique de propylène | 54,8 | 54,3 | 54,3 |
| Deuxième polymère homophasique d'éthylène | 44,9 | 44,4 | 44,4 |
| Nano-charge 1 | 0 | 1 | 0 |
| Nano-charge 2 | 0 | 0 | 1 |
| Antioxydant | 0,3 | 0,3 | 0,3 |

L'origine des constituants rassemblés dans le tableau 1 est la suivante :
- Premier polymère homophasique de propylène est un copolymère statistique de propylène et d'éthylène, commercialisé par la société Basell (LyondellBasell) sous la référence Moplen RP210G, avec un module élastique de 950 MPa (déterminé selon la norme ISO 527-1, -2 (2012);
- Deuxième polymère homophasique d'éthylène est un copolymère d'éthylène et d'octène, commercialisé par la société Dow sous la référence Engage 8540, avec un module élastique d'au plus 300 MPa (déterminé selon la norme ISO 527-1, -2 (2012));

- Nano-charge 1 est un oxyde de silicium traité avec de l'hexamethyl disilazane (HMDS), commercialisé par la société Aerosil sous la référence Aerosil R 812 S, cette nano-charge ayant les caractéristiques suivantes : particules élémentaires dont les dimensions sont inférieures à 20 nm , et surface spécifique (BET) de 195 à 245 m²/g ;
- Nano-charge 2 est un oxyde de silicium traité, commercialisé par la société Aerosil sous la référence Aerosil R 805, cette nano-charge ayant les caractéristiques suivantes : particules élémentaires dont les dimensions sont inférieures à 20 nm, et surface spécifique (BET) de 125 à 175 m²/g,
- Antioxydant est un antioxydant commercialisé par la société BASF sous la référence Irganox® B 225.

Des clichés MEB avec un grossissement de 10000 ont été pris sur des échantillons :
- du premier polymère homophasique (Fig. 2) conforme à l'invention,
- du deuxième polymère homophasique (Fig. 3) conforme à l'invention et
- d'un polymère hétérophasique (Fig. 4) non conforme à l'invention, du type Hifax CA 7441 A.

Ces clichés MEB sont obtenus à partir d'échantillons de ces polymères ayant été au préalable trempés dans de l'azote liquide puis casser mécaniquement pour en obtenir des éclats. Ces clichés MEB permettent clairement de montrer que le premier et le deuxième polymères utilisés dans les exemples de l'invention comprennent une phase sensiblement homogène (i.e. polymères homophasiques), contrairement au polymère hétérophasique Hifax CA 7441A qui comprend deux phases distinctes dont une notamment avec des particules ou nodules ayant une taille moyenne en nombre comprises entre 500 nm et 1 µm.

### 2. Préparation des compositions polymères pour leurs caractérisations

Des bandes de 0,5 mm d'épaisseur ont été extrudées sur une extrudeuse Brabender munie d'une filière plate afin de permettre la réalisation des tests de claquage DC et de conductivité électrique.

### 3. Caractérisation des compositions polymères

### 3.1. Mesure de la conductivité électrique à 60°C :

Les tests de conductivité électrique sont réalisés sur des échantillons de 0,5 mm d'épaisseur. Des électrodes d'argent et un anneau de garde sont appliqués sur les échantillons, puis on réalise un pré-conditionnement de 72h à 60°C. Les électrodes utilisées ont un diamètre de 3 mm avec un anneau de garde. Les conductivités sont obtenues sous un champ électrique de 50 kV/mm en relevant le courant après 24 heures d'application de la tension. Au total, la mesure est réalisée sur 3 échantillons différents puis les courants sont moyennés.

### 3.2. Mesure de la rigidité diélectrique (résistance au claquage diélectrique) :

Les tests de résistance au claquage diélectrique en courant continu sont réalisés sur des échantillons de 0,5 mm d'épaisseur. Les plaques sont placées dans l'huile à température ambiante (25°C). Une rampe de tension linéaire de 2 kV/s est appliquée jusqu'au claquage. Les électrodes utilisées ont un rayon de courbure de 1,5 mm. La mesure est réalisée sur 5 échantillons minimum puis les données sont traitées selon la statistique Weibull 2 paramètres.

### 4. Résultats

Les résultats des différents tests sont rassemblés dans le tableau 2 ci-dessous.

**[Tableaux 2]**

| | **I1** | **I2** | **I3** |
|---|---|---|---|
| Conductivité électrique (exprimée en S/m) en courant continu, à 60°C, sous 50kV/mm | 2,0.1 0⁻¹⁴ | 5,7.10⁻¹⁵ | 1,5.10⁻¹⁴ |
| Résistance au claquage diélectrique (exprimée en kV/mm) en courant continu, à 25°C | 464 | 472 | 477 |

## Revendications

1. Câble électrique comprenant au moins un conducteur électrique allongé et au moins une couche polymérique entourant ledit conducteur électrique allongé, **caractérisé en ce que** la couche polymérique est obtenue à partir d'une composition polymère comprenant :
- au moins un premier polymère homophasique de propylène, et
- au moins un deuxième polymère homophasique d'éthylène, ledit deuxième polymère ayant un module élastique d'au plus 300 MPa, déterminé selon la norme ISO 527-1, -2 (2012),
la quantité en poids du premier polymère étant supérieure à la quantité en poids du deuxième polymère, par rapport au poids total de la composition polymère.

2. Câble électrique selon la revendication 1, **caractérisé en ce que** le premier polymère est un copolymère de propylène et d'au moins une oléfine différente du propylène.

3. Câble électrique selon la revendication 1 ou 2, **caractérisé en ce que** le premier polymère est un copolymère de propylène et d'éthylène.

4. Câble électrique selon l'une quelconque des revendications précédentes, **caractérisé en ce que** le deuxième polymère est un copolymère d'éthylène et d'au moins une oléfine différente de l'éthylène.

5. Câble électrique selon l'une quelconque des revendications précédentes, **caractérisé en ce que** le deuxième polymère est un copolymère d'éthylène et de propylène ou un copolymère d'éthylène et d'octène.

6. Câble électrique selon l'une quelconque des revendications précédentes, **caractérisé en ce que** la composition polymère comprend au moins 30% en poids du premier polymère, et de préférence au moins 40% en poids du premier polymère, par rapport au poids total de la composition polymère.

7. Câble électrique selon l'une quelconque des revendications précédentes, **caractérisé en ce que** la composition polymère comprend au moins 20% en poids du deuxième polymère, et de préférence au moins 30% en poids du deuxième polymère, par rapport au poids total de la composition polymère.

8. Câble électrique selon l'une quelconque des revendications précédentes, **caractérisé en ce que** la composition polymère comprend en outre au moins une nano-charge.

9. Câble électrique selon la revendication précédente, **caractérisé en ce que** la nano-charge est une charge traitée.

10. Câble électrique selon la revendication 8 ou 9, **caractérisé en ce que** la nano-charge est une charge silanisée.

11. Câble électrique selon l'une quelconque des revendications 8 à 10, **caractérisé en ce que** la nano-charge a une surface spécifique (BET) d'au moins 70 m²/g, et de préférence d'au moins 100 m²/g.

12. Câble électrique selon l'une quelconque des revendications 8 à 11, **caractérisé en ce que** la nano-charge est une charge minérale, de préférence choisie parmi les carbonates de métaux alcalino-terreux, les sulfates de métaux alcalino-terreux, les oxydes métalliques, les oxydes de métalloïdes, les silicates métalliques, et les siloxanes.

13. Câble électrique selon l'une quelconque des revendications précédentes, **caractérisé en ce qu'**il comprend au moins une première couche semi-conductrice (3) entourant le conducteur électrique allongé (2), une couche électriquement isolante (4) entourant la première couche semi-conductrice (3), et une deuxième couche semi-conductrice (5) entourant la couche électriquement isolante (4), au moins une desdites couches (3,4,5) dudit câble étant la couche polymérique.

14. Câble électrique selon l'une quelconque des revendications précédentes, **caractérisé en ce que** la couche polymérique est une couche électriquement isolante.

15. Câble électrique selon l'une quelconque des revendications précédentes, **caractérisé en ce que** la couche polymérique est une couche thermoplastique.
